# EUROPEAN PATENT APPLICATION

(11) **EP 2 706 498 A1**
(43) Date of publication of application: **12.03.2014**
(21) Application number: 12183454.3
(22) Date of filing: 07.09.2012
(51) Int. Cl.: G06Q 30/06

(54) **A mechanism for distributing browsing results from a public electronic retailing system**

(71) Applicant: TBWA/Helsinki Oy, 00100 Helsinki (FI)
(72) Inventor: Mohr, Martin, 00250 HELSINKI (FI); Reunanen, Timo, 33710 TAMPERE (FI); Tikkanen, Juha, 01640 Vantaa (FI)
(74) Representative: Papula Oy

(57) **Abstract**

An arrangement for coupling a mobile device with an electronic retailing system. The electronic retailing system includes a touch sensitive display, which is used for operating the retailing facility. The retailing system includes a local controller and a public server. These are used for arranging a unique identifier to a mobile device in a form of internet address. The browsing results of the retailing system are stored according to the unique identifier so that when the webpage associated with the unique identifier is stored as a bookmark it can be accessed later.

## Description

### FIELD OF THE INVENTION

The invention relates to technical solutions relating to online shopping, wherein the online shop is accessed by using a touch screen located in a public place.

### BACKGROUND OF THE INVENTION

Window shopping has been popular for very long time. If a window shopper finds something interesting she goes inside the shop and buys the item she is interested in. A problem arises if the shop is closed.

A plurality of different solutions involving a large touch sensitive display in the shop window have been introduced. The purpose of these solutions is to provide more information to the customer. In some of the implementations the customer is able to choose products to a shopping basket and then order more information or buy the selected products.

One such example is disclosed in international patent application publication W02006/056776. It discloses a retailing installation comprising a display window having a touch sensitive area connected to an electrical circuit which comprises a microprocessor, information store, projector and proximity sensor. The presence of a customer at the window is sensed by sensor which results in a signal being fed to processor. The installation presents the customer with selectable options enabling articles for sale to be selected, examined, purchased and delivered. In a modification information could be retrieved by the customer from remote storage means linked to the internet.

The above described retailing installation may be implemented by choosing from a plurality of different suitable components. For example, there are various ways of implementing display and the touch sensitive control of the system.

In W02006/056776 the user may request more information by SMS-message or e-mail or enter directly into payment routine. In the routine credit or debit card details are used for the payment. The confirmation of the purchase is again transmitted by SMS or e-mail.

A drawback of the retailing installation described above is that it is dependent on information that it does not know. For example, the retailing installation needs a phone number for the SMS or an e-mail address for the e-mail. Thus, the customer must provide the information somehow to the system. This causes naturally challenges with the security and user experience. Thus, the person using the retailing system may not want to type the e-mail address or number publicly.

### SUMMARY

An arrangement for coupling a mobile device with an electronic retailing system. The electronic retailing system includes a touch sensitive display, which is used for operating the retailing facility. The retailing system includes a local controller and a public server. These are used for arranging a unique identifier to a mobile device in a form of internet address. The browsing results of the retailing system are stored according to the unique identifier so that when the webpage associated with the unique identifier is stored as a bookmark it can be accessed later.

In an embodiment of the invention a method for arranging browsing results from a retailing system having a touch sensitive display to a mobile device is disclosed. In the method first an initiation of browsing from the retailing system by using a touch sensitive display is received. Then a unique identifier in form of an internet address is generated. The purpose of the unique identifier is to serve as a permanent location for storing results of the present embodiment. Then the unique identifier to a mobile device is arranged and a bidirectional connection between the retailing system and mobile device is opened. Lastly browsing results are sent to the mobile device. Typically this is done in form of a webpage that is opened by the device. As the page has permanent unique address it can be saved as a bookmark for later use.

There are several ways of arranging the unique identifier to a mobile device. It can be shown on the screen and then a person copies it manually or reads by optical reading means, such as camera. There may be a near field communication tag in the system and the tag is read by the device. The device is configured so that it opens a webpage in accordance with the unique identifier. A wireless network may have been set so that it can be used for accessing the webpage. The network controller can be set so that it automatically connects mobile device to the correct page and may optionally prevent all other communications. In order to verify that the correct mobile device has been connected a personal identification may be requested. The user will type the number shown on the touch sensitive display.

In an embodiment of the invention the method described above is implemented as a system comprising a touch sensitive display, a controller and a public server. The controller is configured to control the operations done on the touch sensitive screen. The controller is connected to the public server by Internet or other common public network. The system is configured to perform the above described method.

In a further embodiment the invention is implemented as software that is executed in the system described above. The software may be working in a distributed environment, wherein a portion of the code is executed in the controller and a portion in the public server.

A benefit of the invention is that the system enables a possibility to browse an electronic retailing system publicly, to choose interesting products and to continue later at the different location without revealing any private information, such as e-mail address, phone number or credit card credentials to others. A further benefit of the invention is that the functionality can be implemented without any changes to mobile devices.

### BRIEF DESCRIPTION OF THE DRAWINGS

The accompanying drawings, which are included to provide a further understanding of the invention and constitute a part of this specification, illustrate embodiments of the invention and together with the description help to explain the principles of the invention. In the drawings:
**Fig. 1** is a flowchart of an example embodiment according to the present invention,
**Fig. 2** is a block diagram of an example embodiment of the present invention,
**Fig. 3** is an example of a signaling chart of an example embodiment of figure 2,
**Fig. 4** is a block diagram of an example embodiment of the present invention.

### DETAILED DESCRIPTION OF THE INVENTION

Reference will now be made in detail to the embodiments of the present invention, examples of which are illustrated in the accompanying drawings.

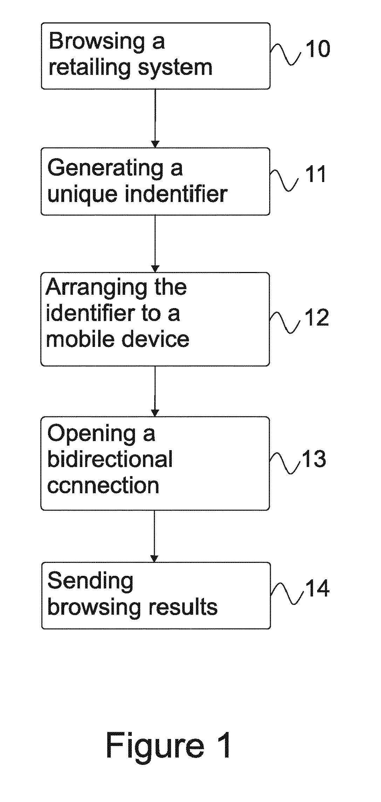

In figure 1 a method according to the present invention is disclosed. The method is initiated when a person starts using a touch screen, which is typically located in a show window, step 10. In the following description it is assumed that the touch screen is located in a shop window so that a person interested in products sold in the shop may browse, for example a catalog of the shop, by using the touch screen. However, the touch screen may be located also in other locations, such as shopping centers, exhibitions and similar, and browsed catalog may be any kind of catalog. In a typical configuration a person interested in the catalog browses and chooses items that are interesting. The browsing process may be completed before performing the following steps, however, this is not necessary. The following steps may be initiated as soon as the person starts using the touch screen, chooses first item or chooses connect to a mobile device.

The actual connecting process is started by generating a unique identifier, step 11. Typically this identifier is generated in a form of an internet address or uniform resource locator (URL). The identifier may be a recyclable short unique identifier that is replaced with a permanent unique identifier after it has been used. After replacing the original unique identifier maybe reused. However, it is possible to use permanent unique identifier from the first place especially in the configurations where the identifier is later arranged automatically to the mobile device. Typically the recyclable short unique identifier is so short that it is easy to type if manual typing is required. The permanent unique identifier may be a randomly selected identifier. The purpose of the random selection is to choose an identifier that cannot be guessed or accidentally accessed.

In the next step the unique identifier is arranged to the mobile device, step 12. The arrangement may be performed by using different mechanisms that are described in more detail in the following description. If the unique identifier cannot be arranged to the mobile device automatically without user interaction, it may be show to the user on the touch screen in form of internet address. The address may be presented in conventional text form, optical or electronically readable form or any other suitable form.

When the unique identifier is arranged to the mobile device it uses the identifier for opening a bidirectional connection between the service and the mobile device, step 13. This may be performed, for example, by using the unique identifier as an internet option in the internet browser. When the browser opens a webpage by using the internet address, a bidirectional communication is initiated. The bidirectional communication maybe implemented by using the websocket protocol or other similar purpose protocol.

In the last step the browsing results are sent to the mobile device, step 14. The results may be sent during the browsing process so that when a person chooses an item, it will be send to a basket that is presented in the mobile device. This naturally depends on the existence of the connection. If the person chooses to connect only after she has chosen items they will be sent together.

As the results are located in a unique webpage, the person using the touch screen may save the page as a bookmark. Furthermore, the internet address may be sent to e-mail or social media applications so that the person can check the chosen items later at home by using a computer or other tools. Furthermore, if the person decides to buy one or more of the chosen items the actual transaction involving payment by credit card may be done in a safe environment instead of a public place.

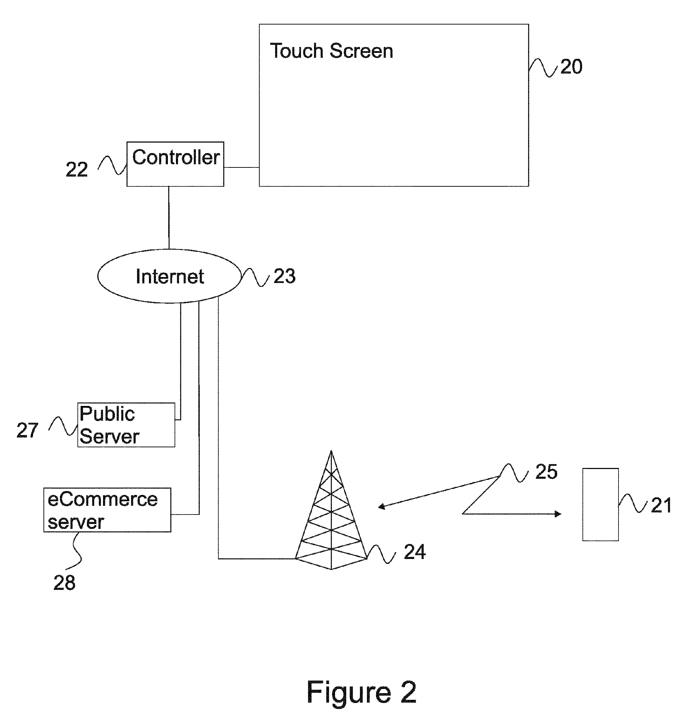

In figure 2 a block diagram of an example embodiment of the present invention. In the embodiment a touch screen 20 is used in a shop window or similar location. A person browsing the catalog has a mobile phone 21, or similar device, that is connected to a mobile communication network 24 by using a wireless communication 25. The mobile device is connected to Internet 23 by using mobile communication network 23. The touchscreen 20 is typically connected to a controller 22 and in a typical configuration comprises all data that is relevant locally. The controller 22 is further connected to Internet 23 and communicates with the public server 27 and eCommerce server 28. Typically a plurality of controllers 12 connected to the public server 27. In other words, the public server 27 is managing the service for plurality of shops. Furthermore one or more eCommerce servers 28 may be connected to the system. They are typically accessed by the public server, however, they may be completely independent from the other service. For example, the eCommerce server 28 may be brand specific and the catalog shown on the touch screen 20 may have products from a variety of manufacturers.

In the example of Figure 2 the mobile phone 21 does not have any additional features and is using conventional packet data switched connection. The service may be implemented as a webpage so no special purpose software is needed.

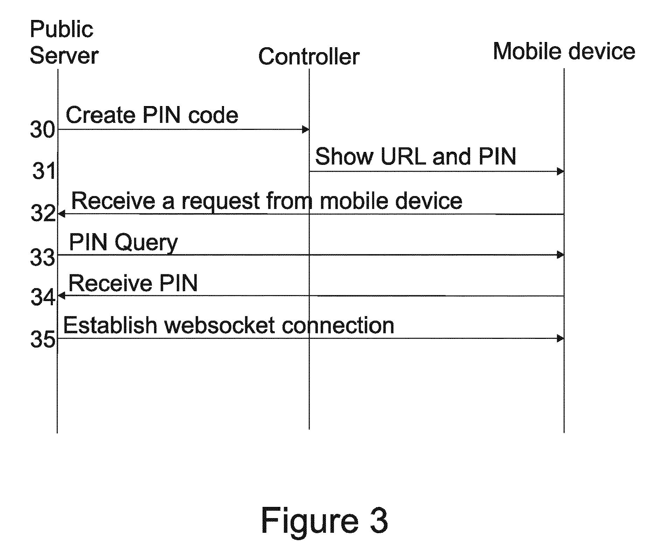

Figure 3 discloses an example of possible signaling between the public server 27 and mobile device 21 used in an embodiment according to figure 2. In the embodiment the connection between the public server and mobile device is verified by using a personal identification number (PIN). After the URL and PIN have been generated they are transmitted from the public server to the controller, signal 30. Then the URL and PIN are shown on the touch screen, signal 31. The user types the URL in her browser or reads the URL by using other means, such as camera for optical reading.. Then the public server receives a http-protocol request from the mobile device, signal 32. In the request a page in accordance with the URL is requested. Then the public server sends a PIN Query to the mobile device, signal 33. The person types the PIN shown on the touch screen to the mobile device and sends it to the public server in signal 34, which is received by the public server. Lastly, a bidirectional communication, such as websocket connection, is established by sending signal 35 to the mobile device.

The embodiment of figure 2 may be modified so that it incorporates a near field communication tag. Near field communication tags are tags that can communicate with corresponding devices in the vicinity of the tag. The tag can provide the unique identifier to the mobile device. As the device needs to be in the vicinity of the retailing system the PIN query is optional in this case. Furthermore, the tag may indicate the permanent unique identifier as there is no need for short identifier. Furthermore, a when a mobile device detects the unique identifier in form of internet address, it will ask from the user of the mobile device a permission to open the indicated address.

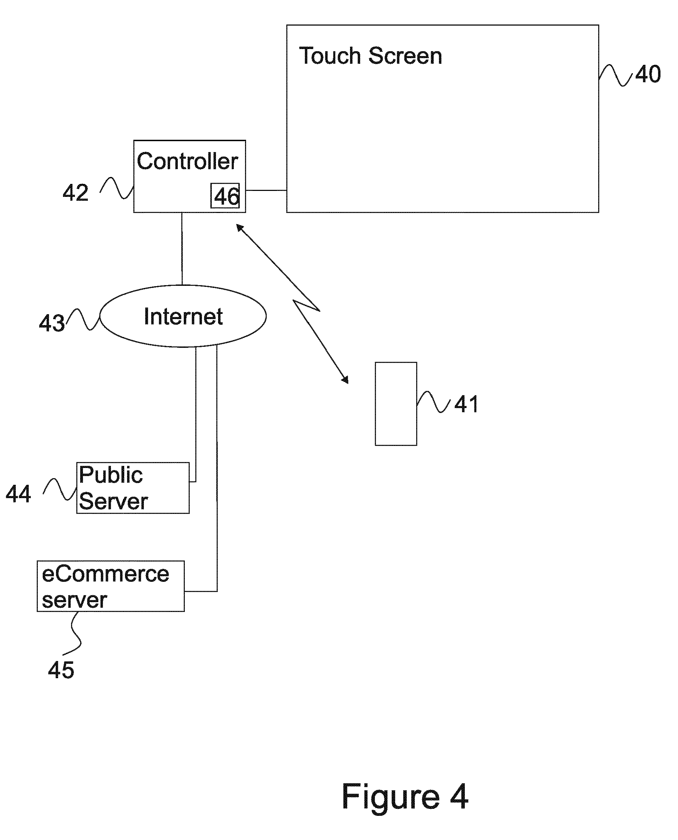

Figure 4 discloses an alternative configuration, wherein a Wi-Fi-connection, or other similar local area connection is used. The embodiment includes a touch screen 40, a mobile device 41, controller of the touch screen 42, public server 44 and eCommerce server 45. Controller 42, public server 44 and eCommerce server 45 are connected to Internet 43. The difference between the embodiments of figure 2 and figure 4 are that the mobile device 41 is connected a wireless network controller 46 in the controller 42. The coverage area of the network provided by the controller 42 may be limited so that it is usable only in the vicinity of the touch screen 40. The controller 42 is configured to use network controller 46 in communication so that the it allows the connection only to the unique internet address. Thus, when a user connects her mobile device 41, it is automatically directed to the correct webpage. Thus, there is no need for providing the URL or PIN but the system is instantly ready for use.

The above mentioned method may be implemented as computer software which is executed in a system as disclosed above. When the software is executed in a computing device it is configured to perform the above described inventive method in order to facilitate discovery resources in a mobile communication network. The software is embodied on a computer readable medium so that it can be provided to the computing device.

As stated above, the components of the exemplary embodiments can include computer readable medium or memories for holding instructions programmed according to the teachings of the present inventions and for holding data structures, tables, records, and/or other data described herein. Computer readable medium can include any suitable medium that participates in providing instructions to a processor for execution. Such a medium can take many forms, including but not limited to, non-volatile media, volatile media, transmission media, and the like. Non-volatile media can include, for example, optical or magnetic disks, magneto-optical disks, and the like. Volatile media can include dynamic memories, and the like. Transmission media can include coaxial cables, copper wire, fiber optics, and the like. Transmission media also can take the form of acoustic, optical, electromagnetic waves, and the like, such as those generated during radio frequency (RF) communications, infrared (IR) data communications, and the like. Common forms of computer-readable media can include, for example, a floppy disk, a flexible disk, hard disk, magnetic tape, any other suitable magnetic medium, a CD-ROM, CD±R, CD±RW, DVD, DVD-RAM, DVD±RW, DVD±R, HD DVD, HD DVD-R, HD DVD-RW, HD DVD-RAM, Blu-ray Disc, any other suitable optical medium, a RAM, a PROM, an EPROM, a FLASH-EPROM, any other suitable memory chip or cartridge, a carrier wave or any other suitable medium from which a computer can read.

It is obvious to a person skilled in the art that with the advancement of technology, the basic idea of the invention may be implemented in various ways. The invention and its embodiments are thus not limited to the examples described above; instead they may vary within the scope of the claims.

## Claims

1. A method for arranging browsing results from a retailing system having a touch sensitive display to a mobile device, comprising:
receiving an initiation of browsing from said retailing system by using a touch sensitive display;
generating a unique identifier in form of an internet address;
arranging said unique identifier to a mobile device;
opening a bidirectional connection between said retailing system and mobile device;
sending browsing results to said mobile device.

2. The method according to claim 1, wherein the arranging said unique identifier comprises displaying said unique identifier on said touch sensitive display.

3. The method according to claim 2, wherein the method further comprises reading said unique identifier by using optical reader.

4. The method according to claim 1, wherein the method further comprises reading said unique identifier by using near field communication.

5. The method according to any of preceding claims claim 1 - 4, wherein the method further comprises displaying a personal identification number on said touch sensitive display.

6. The method according to claim 5, wherein the method further comprises receiving said personal identification number from said mobile device.

7. The method according to claim 1, wherein said arranging comprises providing an automatic internet access to an internet address according to said generated unique identifier.

8. The method according to claim 7, wherein said arranging comprises preventing internet access to other internet addresses than said internet address in accordance with generated unique identifier.

9. A system for retailing, which system further comprises:
a touch sensitive display (20, 40);
a controller (22, 42) configured to control said touch sensitive display (22, 42); and
a public server (27, 44) connected to said controller (22, 42) by public communication network (23, 43);
**characterized in that** the system is configured to:
generate a unique identifier in form of an internet address;
arrange said unified identifier to a mobile device (21, 41);
open a bidirectional connection between said retailing system and mobile device; and
send browsing results to said mobile device.

10. The system according to claim 9, wherein the said public server (27, 44) is configured to generate said unique identifier.

11. The system according to claim 9 or 10, wherein said controller (22, 42) is configured to arrange said unique identifier to a mobile device (21, 41).

12. The system according to any of preceding claims 9 - 11, wherein said public server (27, 44) is configured to send browsing results to said mobile device (21, 41).

13. The system according to any of preceding claims 9 - 12, wherein the controller (42) comprises a wireless network controller (46).

14. The system according to claim 13, wherein said wireless network controller (46) is configured to route only requests to said interned address in accordance with the unique identifier.

15. A computer program comprising code adapted to cause the method according to any of claims 1 - 8 when executed on a data-processing system.
